(19) Europäisches Patentamt
European Patent Office
Office européen des brevets

(11) EP 1 844 961 A1

(12) EUROPÄISCHE PATENTANMELDUNG

(43) Veröffentlichungstag:
17.10.2007 Patentblatt 2007/42

(51) Int Cl.:
*B60G 17/015* (2006.01)

(21) Anmeldenummer: 07007153.5

(22) Anmeldetag: 05.04.2007

(84) Benannte Vertragsstaaten:
AT BE BG CH CY CZ DE DK EE ES FI FR GB GR
HU IE IS IT LI LT LU LV MC MT NL PL PT RO SE
SI SK TR
Benannte Erstreckungsstaaten:
AL BA HR MK YU

(30) Priorität: 11.04.2006 DE 102006016989

(71) Anmelder: KNORR-BREMSE SYSTEME FÜR
NUTZFAHRZEUGE GMBH
80809 München (DE)

(72) Erfinder: Fazakas, Gergeley
1214 Budapest (HU)

(74) Vertreter: Schönmann, Kurt
Knorr-Bremse AG,
Patentabteilung - V/RG,
Moosacher Strasse 80
80809 München (DE)

(54) **Verfahren zur Niveauregulierung eines Fahrzeugaufbaus durch Regelung der Luftmasse in den Luftbälgen**

(57) Die Erfindung betrifft ein Verfahren zur Niveauregulierung eines Fahrzeugaufbaus mit Hilfe einer Luftfederungseinrichtung (1) durch Be- oder Entlüften von Luftbälgen (4a, 4b, 6a, 6b, 8a, 8b, 8c).

Die Erfindung sieht vor, dass die in wenigstens einigen der Luftbälge (4a, 4b, 6a, 6b, 8a, 8b, 8c) vorhandene Ist-Luftmasse ($m_{ist}$) oder Ist-Luftmenge bestimmt und als Regelgröße in Abhängigkeit von einem vorgegebenen Soll-Niveau ($h_{soll}$) des Aufbaus auf eine Soll-Luftmasse ($m_{soll}$) oder Soll-Luftmenge eingeregelt wird.

FIG.1

**Beschreibung**

Stand der Technik

Die Erfindung geht aus von einem Verfahren zur Niveauregulierung eines Fahrzeugaufbaus mit Hilfe einer Luftfederungseinrichtung durch Be- oder Entlüften wenigstens eines Luftbalgs, gemäß dem Oberbegriff von Anspruch 1.

Bei einem bekannten Verfahren zur Niveauregulierung werden zusätzlich zu einer Stahlfederung (z.B. Blattfedern) oder bei einem volltragenden System Luftfedern in Form von Luftbälgen verwendet, wobei das Luftvolumen der Luftbälge zur Federung genutzt wird. Gleichzeitig ermöglichen solche Systeme durch Be- und Entlüften der Luftbälge mittels einer Ventileinrichtung eine Niveauregelung, welche vor allem für Nutzfahrzeuge Vorteile bietet, wenn deren Aufbau z.B. zum Beladen auf das Niveau einer Rampe eingestellt oder zur Vermeidung eines schiefen Aufbaus aufgrund einer exzentrischen Beladung eine Korrektur durchgeführt werden muss. Dabei kann jedem Rad oder auch nur jeder Achse ein Luftbalg zugeordnet sein.

Die Niveau-Istlage des Aufbaus wird meist mechanisch an Fahrwerksteilen abgegriffen und im Rahmen der Niveauregelung als Regelgröße herangezogen, um durch einen Soll-Istwertvergleich das Niveau des Aufbaus durch Be- oder Entlüften der Luftbälge an eine Niveau-Solllage anzupassen. Problematisch ist hierbei, dass sich während der Be- und Entlüftung der Luftbälge zum Anheben bzw. zum Absenken des Niveaus die Lufttemperatur aufgrund des schnellen Druckanstiegs bzw. der schnellen Druckabsenkung erhöht bzw. reduziert. Wenn dann nach erreichtem Niveau die Ventileinrichtung so geschaltet wird, dass sich die Luftvolumina in den Luftbälgen nicht mehr ändern, passt sich die Lufttemperatur dieser Luftvolumina an die Außentemperatur an, wodurch sich wegen des dann kleiner bzw. größer werdenden Luftvolumens allerdings auch das Niveau in unerwünschter Weise verändert. Deshalb muss bei der Niveauregulierung des Stands der Technik nachgeregelt werden, was zahlreiche Ventilschaltvorgänge der Ventileinrichtung und damit einen gewissen Verschleiß nach sich zieht.

Bei Nutzfahrzeugen mit drei oder mehr Achsen, von welchen eine Achse eine Liftachse ist, wird üblicherweise neben der Niveaulage auch der Druck als Regelgröße herangezogen, weil gemäß einer Vorgabe beispielsweise die Last auf die Achsen so verteilt werden soll, dass in allen Tragbälgen gleicher Druck herrscht. Alternativ kann die Druckregelung auch so ausgelegt sein, dass die angetriebene Hinterachse mit einer maximal zulässigen Last beaufschlagt wird und die Liftachse mit der Restlast belastet wird. In beiden Fällen sind demnach zwei Regelkreise vorhanden, wobei in dem einen das Niveau und in dem anderen der Druck als Regelgröße auf Sollwerte eingeregelt werden. Dies bedingt jedoch eine relativ komplexe Regelungslogik.

Der vorliegenden Erfindung liegt demgegenüber die Aufgabe zugrunde, ein Verfahren der eingangs erwähnten Art derart weiter zu entwickeln, dass eine einfachere und robustere Regelung realisierbar ist.

Diese Aufgabe wird erfindungsgemäß durch die kennzeichnenden Merkmale von Anspruch 1 gelöst.

Vorteile der Erfindung

Die Erfindung basiert auf dem Gedanken, dass als Regelgröße die im Luftbalg vorhandene Ist-Luftmasse oder Ist-Luftmenge bestimmt und in Abhängigkeit von einem Soll-Niveau des Fahrzeugaufbaus auf eine Soll-Luftmasse oder Soll-Luftmenge eingeregelt wird.

Gemäß der Zustandsgleichung der Gase

$$p*V = m*R*T, \quad \text{bzw.}$$

$$m = (p*V)/(R*T) = (p*h*A)/(R*T) \quad (1)$$

mit:

T : Lufttemperatur,
p : Druck in dem jeweiligen Luftbalg,
V : Volumen des jeweiligen Luftbalgs,
m : Luftmasse in dem jeweiligen Luftbalg,

R : Gaskonstante.
A : konstante Balggrundfläche A
h : Höhe des Luftbalgs.

hängt die Luftmasse m sowohl vom Druck p als auch von der Höhe h des jeweiligen Luftbalgs ab, welche wiederum von der jeweiligen Niveaulage des Aufbaus bestimmt wird, so dass beide Größen, der Druck p einerseits und die Niveaulage h andererseits in der Größe Luftmasse m enthalten sind. Wenn nun die Luftmasse m als einzige Regelgröße herangezogen wird, so erübrigt sich folglich eine jeweils getrennte Regelung der Niveaulage h und des Drucks p, so dass sich die Regelungslogik vereinfacht, weil nur noch auf eine einzige Regelgröße anstatt auf zwei Regelgrößen eingeregelt werden muss.

Alternativ zur Luftmasse m als Regelgröße kann auch die Luftmenge n herangezogen werden, wobei gilt :

$$n = m / M$$

wobei

n : die Luftmenge,
M : die molare Masse der Luft,
m : die Luftmasse ist.

Darüber hinaus erübrigt sich mit der Erfindung auch die beim Stand der Technik notwendige Niveau-Nachregelung aufgrund von Temperatureinflüssen, wenn sich die Temperatur der Balgluft aufgrund eines bei Belüftung schnellen Druckanstiegs erhöht bzw. bei Entlüftung aufgrund einer schnellen Druckabsenkung erniedrigt. Denn wenn die Soll-Luftmasse $m_{soll}$, auf welche die Ist-Luftmasse $m_{ist}$ eingeregelt wird, mit Hilfe der Zustandsgleichung (1) auf der Basis der jeweiligen Außenlufttemperatur $T_{außen}$ oder Umgebungstemperatur berechnet wird, welche sich zwangsläufig einige Zeit nach einer Be- oder Entlüftung in dem Luftbalgvolumen V einstellt, so befindet sich exakt die Luftmasse $m_{soll}$ in dem Luftbalg, welche den Aufbau bei Außenlufttemperatur $T_{außen}$ auf der gewünschten Niveaulage $h_{soll}$ hält, so dass kein Nachregeln mehr notwendig ist.

Nicht zuletzt ergeben sich mit der Erfindung bei Nutzfahrzeugen mit zwei oder mehr Hinterachsen Vorteile, insbesondere bei Nutzfahrzeugen mit einer Liftachse, wenn beispielsweise eine angetriebene Hinterachse und die Liftachse unterschiedlich belastet sind und sich folglich auch unterschiedliche Drücke in den achsbezogenen Luftbälgen einstellen. Falls aufgrund einer Be- oder Entladung eine Niveauanpassung notwendig ist, werden die Luftbälge an beiden Achsen aufgrund der in ihnen herrschenden unterschiedlichen Drücke in der Regel nicht gleichzeitig be- oder entlüftet, sondern achsweise nacheinander. Das bedeutet, dass beispielsweise der Druck in den der angetriebenen Hinterachse zugeordneten Luftbälge zuerst angepasst wird, beispielsweise durch Belüften, wodurch die angetriebene Hinterachse belastet und die Liftachse entlastet wird, weil sie noch nicht belüftet ist und bei steigendem Niveau des Aufbaus das Volumen der der Liftachse zugeordneten Luftbälge größer und der Druck in ihnen demzufolge kleiner wird. In diesem Zwischenzustand, in welchem die angetriebene Hinterachse mehr Last und die Liftachse weniger Last als die Soll-Last trägt, würde die eingangs beschriebene Regelung des Stands der Technik zunächst mit einer temporär höheren Achslast und in einem weiteren Schritt mit der demgegenüber niedrigeren End-Achslast für die angetriebene Hinterachse rechnen, was mit einem gewissen Regelungsaufwand verbunden ist. Hingegen wird bei der erfindungsgemäßen Luftmassen- oder Luftmengenregelung die Soll-Luftmenge sofort abhängig von der am Ende geforderten Soll-Last auf der jeweiligen Achse berechnet, so dass temporäre Zustände quasi überbrückt werden.

Insgesamt bringt die Ersparnis von Nachregelvorgängen den Vorteil einer geringeren Beanspruchung der Ventileinrichtung mit sich, da weniger Ventilschaltvorgänge stattfinden. Weiterhin wird die Dynamik der Regelung erhöht.

Durch die in den Unteransprüchen aufgeführten Maßnahmen sind vorteilhafte Weiterbildungen und Verbesserungen der in Patentanspruch 1 angegebenen Erfindung möglich.

Gemäß einer besonders bevorzugten Ausführungsform wird die Ist-Luftmasse oder die Ist-Luftmenge in einem Luftbalg aus einer gemessenen Niveaulage und einem gemessenen Luftbalgdruck sowie der gemessenen Außentemperatur bestimmt.

Die Soll-Luftmasse oder Soll-Luftmenge in einem Luftbalg wird bevorzugt gemäß folgender Vorgehensweise bestimmt:

a) aus den gemessenen Luftbalgdrücken wird die Ist-Achslast jeder Achse und daraus die Ist-Gesamtmasse des Fahrzeugs ermittelt,

b) aus der Ist-Gesamtmasse des Fahrzeugs wird eine Soll-Achslast je Achse nach einer Lastverteilungsvorgabe ermittelt,

c) aus der Soll-Achslast je Achse und dem vorgegebenen Soll-Niveau wird eine Soll-Luftmasse der dieser Achse zugeordneten Luftbälge oder des dieser Achse zugeordneten Luftbalgs ermittelt.

Die Berechnung der Ist-Luftmasse und der Soll-Luftmasse in den Luftbälgen erfolgt bevorzugt auf der Basis der Zustandsgleichung der Gase :

$$p * V = m * R * T_{außen}$$

mit:

$T_{außen}$ :    Außenlufttemperatur,

p :       Druck in dem jeweiligen Luftbalg,

V :       Volumen des jeweiligen Luftbalgs,

m :      Luftmasse in dem jeweiligen Luftbalg,

R :       Gaskonstante.

Genaueres geht aus der folgenden Beschreibung eines Ausführungsbeispiels hervor.

Zeichnung

Nachstehend ist ein Ausführungsbeispiel der Erfindung in der Zeichnung dargestellt und in der nachfolgenden Beschreibung näher erläutert. In der Zeichnung zeigt

Fig.1     einen schematischen Funktionsschaltplan einer Luftfederungseinrichtung;

Fig.2     einen schematischen Ablaufplan eines Verfahrens zur Niveauregulierung eines Fahrzeugaufbaus gemäß einer bevorzugten Ausführungsform der Erfindung.

Beschreibung des Ausführungsbeispiels

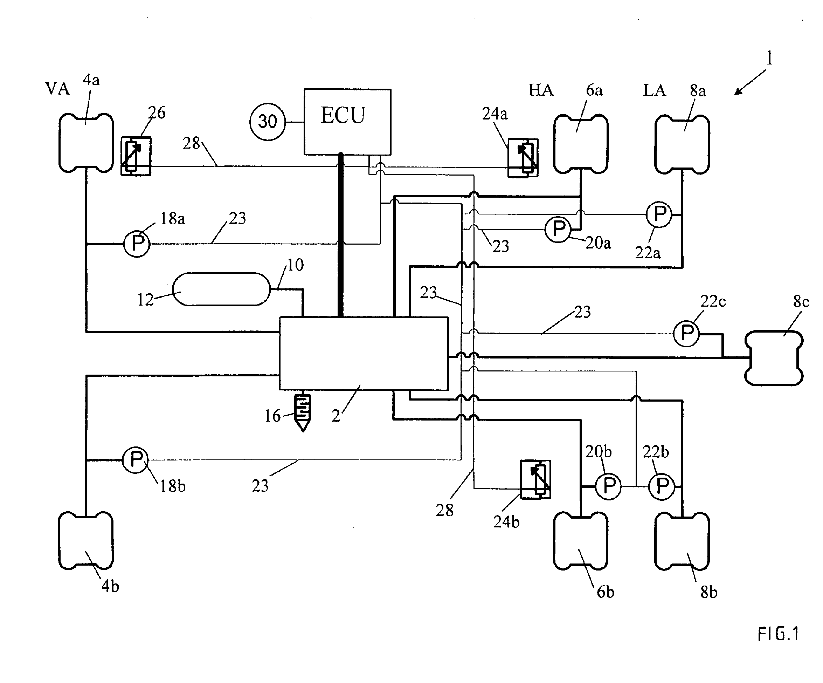

Die in Fig.1 insgesamt mit 1 bezeichnete bevorzugte Ausführungsform einer Luftfederungseinrichtung eines Nutzfahrzeugs umfasst eine beispielsweise zentrale Ventileinrichtung 2 um Be- und Entlüften von beispielsweise zwei der Vorderachse VA zugeordneten Luftbälgen 4a, 4b und beispielsweise je zwei einer Hinterachse HA und LA zugeordneten Luftbälgen 6a, 6b bzw. 8a, 8b. Weiterhin wird durch die zentrale Ventileinrichtung 2 ein Liftbalg 8c zum Anheben und Senken einer Liftachse LA be- und entlüftet. Die Liftachse LA stellt eine zweite Hinterachse dar und wird nur dann herabgelassen, wenn die Achslast der ersten Hinterachse HA eine vorgegebene obere Grenzlast überschreitet.

Die Ventileinrichtung 2 ist über eine Versorgungsleitung 10 an einen Druckluftvorrat 12 angeschlossen, um über nicht gezeigte Luftbalgventile und individuelle Luftleitungen 14 die Luftbälge 4a, 4b, 6a, 6b, 8a, 8b entweder mit dem Druckluftvorrat 12 oder mit einer Entlüftung 16 zu verbinden, d.h., dass jeder Luftbalg 4a, 4b, 6a, 6b, 8a, 8b, 8c individuell be- und entlüftbar ist. Weiterhin ist jeder Luftbalg 4a, 4b, 6a, 6b, 8a, 8b, 8c vorzugsweise an einen ihm zugeordneten Drucksensor 18a, 18b, 20a, 20b 22a, 22b, 22c angeschlossen, um den in ihm jeweils herrschenden Luftdruck zu messen. Die Drucksensoren 18a, 18b, 20a, 20b 22a, 22b, 22c sind mit dem elektronischen Steuergerät ECU durch elektrische Leitungen 23 signalübertragend verbunden.

Die in der Ventileinrichtung 2 zusammengefassten Ventile sind vorzugsweise als elektromagnetische Ventile ausgebildet. Die elektrische Ansteuerung der Ventileinrichtung 2 wird über ein elektronisches Steuergerät ECU realisiert.

Zwei Niveaugeber, ein der rechten Seite zugeordneter Niveaugeber 24a und ein der linken Seite zugeordneter Niveaugeber 24b messen z.B. mit Hilfe von Drehpotentiometern, deren Spannungsabgriff über je einen Antriebshebel beispielsweise mit der angetriebenen Hinterachse HA verbunden ist, den Abstand zwischen der Hinterachse HA und dem Fahrzeugaufbau. Ein weiterer Niveaugeber 26 dieser Bauart ist der Vorderachse VA zugeordnet. Die Niveaugeber 24a, 24b, 26 sind mit dem elektronischen Steuergerät ECU durch elektrische Leitungen 28 signalübertragend verbunden.

Ein Temperatursensor 30 misst die Außenlufttemperatur $T_{außen}$ und meldet ein entsprechendes Signal an das Steuergerät ECU.

Vor diesem Hintergrund ist die Funktionsweise der erfindungsgemäßen Luftfederungseinrichtung 1 wie folgt :

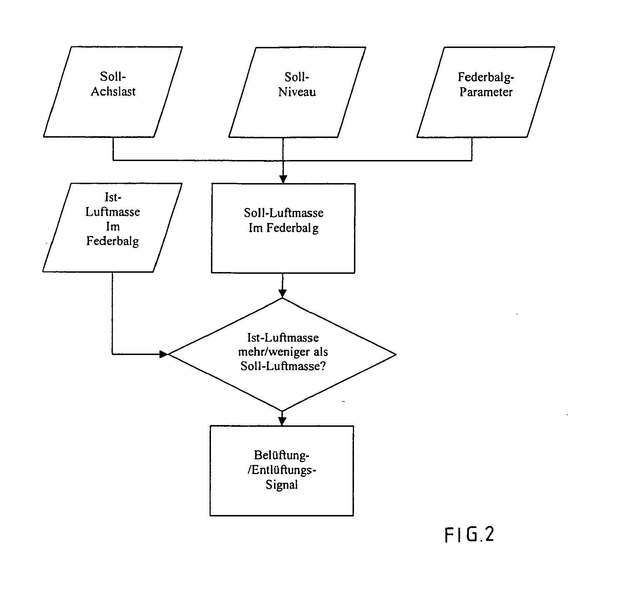

Als Regelgröße werden die in wenigstens einigen, vorzugsweise in allen Luftbälgen 4a, 4b, 6a, 6b, 8a, 8b, 8c vorhandenen Ist-Luftmassen $m_{ist}$ bestimmt und von den Regelroutinen des Steuergeräts in Abhängigkeit von einem vorgebeben Soll-Niveau des Aufbaus auf Soll-Luftmassen $m_{soll}$ eingeregelt. Dieser Sachverhalt wird durch den Ablaufplan von Fig.2 symbolisiert.

Hierzu wird die in wenigstens einem Luftbalg 4a, 4b, 6a, 6b, 8a, 8b, 8c vorhandene Ist-Luftmasse $m_{ist}$ aus dem durch die Niveaugeber 24a, 24b, 26 gemessenen Niveau des Aufbaus und dem gemessenen Luftbalgdruck $p_{ist}$ sowie der Außenlufttemperatur $T_{außen}$ nach der Zustandgleichung (1) der Gase bestimmt :

$$p_{ist} * V_{ist} = m_{ist} * R * T_{außen} \qquad (1)$$

mit:

| | |
|---|---|
| $T_{außen}$ : | Außenlufttemperatur, |
| $p_{ist}$ : | Ist-Druck in dem jeweiligen Luftbalg, |
| $V_{ist}$ : | Ist-Volumen des jeweiligen Luftbalgs, |
| $m_{ist}$: | Ist-Luftmasse in dem jeweiligen Luftbalg, |
| R : | Gaskonstante. |

Während die Außenlufttemperatur $T_{außen}$ durch den Temperatursensor 30 und der Ist-Druck $p_{ist}$ im jeweiligen Luftbalg 4a, 4b, 6a, 6b, 8a, 8b, 8c durch den ihm zugeordneten Drucksensor 18a, 18b, 20a, 20b, 22a, 22b, 22c gemessen wird, wird das Ist-Volumen $V_{ist}$ des jeweiligen Luftbalgs 4a, 4b, 6a, 6b, 8a, 8b, 8c aus den bekannten Federbalgparametern wie der konstanten Balggrundfläche A und der jeweiligen Höhe $h_{ist}$ des Luftbalgs 4a, 4b, 6a, 6b, 8a, 8b, 8c, welche von dem durch den Niveaugeber 24a, 24b, 26 gemessenen Niveau des Aufbaus an der Stelle des Luftbalgs 4a, 4b, 6a, 6b, 8a, 8b, 8c und damit von der dortigen Last abhängt, nach Gleichung (2) berechnet:

$$V_{ist} = A * h_{ist} \qquad (2)$$

Eine Kombination von Gleichung (1) mit Gleichung (2), aufgelöst nach der Ist-Luftmasse $m_{ist}$ ergibt dann :

$$m_{ist} = (p_{ist} * V_{ist})/(R * T_{außen}) = (p_{ist} * h_{ist} * A)/(R * T_{außen}) \qquad (3)$$

Eine Messung des Beladungszustands erfolgt vorzugsweise nach jeder Beladungsänderung. Da sich Druckstöße aufgrund einer Fahrt über Unebenheiten nicht auf das Messergebnis auswirken sollen, soll eine Druckmessung bevorzugt bei langsamer Fahrt bzw. im Stillstand stattfinden.

Die Soll-Luftmasse $m_{soll}$ in einem Luftbalg 4a, 4b, 6a, 6b, 8a, 8b, 8c wird nach folgender Vorgehensweise bestimmt:

Aus den gemessenen Ist-Drücken $p_{ist}$ der Luftbälge 4a, 4b, 6a, 6b, 8a, 8b, 8c wird zunächst die Ist-Achslast jeder Achse VA, HA, LA und daraus die Ist-Gesamtmasse des Fahrzeugs ermittelt, welche von der jeweiligen Beladung abhängt.

Aus der Ist-Gesamtmasse des Fahrzeugs wird eine Soll-Achslast je Achse VA, HA, LA nach einer Lastverteilungsvorgabe ermittelt. Wenn beispielsweise ausgehend von einem Startzustand, in welchem die Liftachse LA angehoben ist, die Vorderachse VA aufgrund des Fahrzeugeigengewichts mit 4.000 kg und die Hinterachse $HA_1$ mit 8.000 kg belastet ist, das Fahrzeug mit 10.000 kg beladen wird, so ändert sich die Ist-Gesamtmasse des Fahrzeugs auf 22.000 kg, wobei beispielsweise die Vorderachse mit 5.000 kg und die Hinterachse mit 17.000 kg belastet wird. Da die Hinterachsbelastung eine vorgegebene obere Grenzbelastung, z.B. 11.000 kg überschreitet, wird die Liftachse LA abgesenkt. Die Lastverteilungsvorgabe kann dann beispielsweise darin bestehen, dass die angetriebene Hinterachse HA bis zu dem erlaubten oberen Grenzbelastung 11.000 kg belastet wird, und der Rest der Liftachse LA zugeordnet wird. Dann wird die Vorderachse VA beispielsweise weiterhin mit 5.000 kg, die Hinterachse HA mit den erlaubten Maximalwert 11.000 kg und die Liftachse mit den verbleibenden 6.000 kg belastet. Diese Werte stellen dann die Soll-Achslasten für die Vorderachse VA, die Hinterachse HA und die Liftachse LA gemäß der Lastverteilungsvorgabe dar. Selbstverständlich ist die Lastverteilungsvorgabe nach jedem beliebigem anderen Muster darstellbar, beispielsweise auch nach einer Gleichdruckregelung in den Luftbälgen 6a und 8a bzw. 6b und 8b wie eingangs bereits beschrieben. Den Soll-Achslasten entsprechen Soll-Drücke $p_{soll}$ in den Luftbälgen 4a, 4b, 6a, 6b, 8a, 8b, 8c.

Die Sollniveaus $h_{soll}$ der Achsen VA, HA und LA werden vorgegeben, beispielsweise über eine mit dem Steuergerät ECU kommunizierende durch den Fahrer bedienbare hier nicht gezeigte Eingabeeinrichtung, in welche das gewünschte Soll-Niveau $h_{soll}$ eingegeben wird. Aus den Soll-Achslasten, welchen Soll-Drücke $p_{soll}$ in den Luftbälgen 4a, 4b, 6a, 6b, 8a, 8b, 8c entsprechen und dem vorgegebenen Soll-Niveau $h_{soll}$ wird dann schließlich die Soll-Luftmasse $m_{soll}$ der dieser Achse VA, HA, LA zugeordneten Luftbälge 4a, 4b, 6a, 6b, 8a, 8b, 8c oder ein des dieser Achse VA, HA, LA zugeordneten Luftbalgs 4a, 4b, 6a, 6b, 8a, 8b, 8c mit Hilfe der Zustandsgleichung (4) berechnet:

$$ m_{soll} = (p_{soll} * V)/(R * T) = (p_{soll} * h_{soll} * A)/(R * T_{außen}) \qquad (4) $$

Als Temperaturwert T wird die Außenlufttemperatur $T_{außen}$ herangezogen, welche sich einige Zeit nach einem Be- oder Entlüftungsvorgang in der Balgluft einstellt, so dass bezogen auf ein Luftvolumen V unter Außenlufttemperatur $T_{außen}$ bei einer Belüftung zunächst ein größeres, weil unter einer höheren Temperatur stehendes Luftvolumen V zugeführt und bei einer Entlüftung zunächst ein kleineres, weil unter einer niedrigeren Temperatur stehendes Luftvolumen V abgeführt wird. Erst bei Angleichung der Balglufttemperatur auf die Außentemperatur $T_{außen}$ stellt sich dann das Luftvolumen V ein, aus welchem sich letztlich das gewünschte Soll-Niveau $h_{soll}$ ergibt, so dass keine Nachregelung notwendig ist.

Wenn also beispielsweise bei abgehobener Liftachse LA das Nutzfahrzeug gemäß dem obigen Zahlenbeispiel beladen wird, so werden die Luftbälge 4a, 4b, 6a, 6b zusammengedrückt und der Fahrzeugaufbau senkt sich. Die mit der Hinterachse HA und der Vorderachse VA verbundenen Hebel verdrehen sich die Schleifer der beispielsweise als Drehpotentiometer ausgeführten Niveaugeber 24a, 24b, 26 auf der jeweiligen Potentiometerbahn und geben ein elektrisches Signal an das Steuergerät ECU. Das Steuergerät ECU erkennt die Spannungsabweichung und gibt wegen einer beispielsweise hohen Last elektrische Stellbefehle an die Liftachse LA, um sie abzusenken. Gleichzeitig wird durch die Drucksensoren 18a, 18b, 20a, 20b, 22a, 22b, 22c der jeweilige Ist-Luftdruck $p_{ist}$ in den Luftbälgen 4a, 4b, 6a, 6b, 8a, 8b, 8c sowie durch den Temperatursensor 30 die Außenlufttemperatur $T_{außen}$ an das Steuergerät ECU gemeldet und dort gemäß Gleichung (3) die Ist-Luftmasse $m_{ist}$ in dem jeweiligen Luftbalg 4a, 4b, 6a, 6b, 8a, 8b, **8c** berechnet.

Darüber hinaus wird auch die Soll-Luftmasse $m_{soll}$ in jedem Luftbalg 4a, 4b, 6a, 6b, 8a, 8b, 8c gemäß Gleichung (4) berechnet. Da die Zuladung eine Absenkung des Niveaus des Aufbaus bewirkt hat, dieses aber beispielsweise auf einem vorgegebenen Laderampenniveau konstant gehalten werden soll, ist im vorliegenden Fall die Ist-Luftmasse $m_{ist}$ in jedem Luftbalg 4a, 4b, 6a, 6b, 8a, 8b geringer und im Liftbalg 8c höher als die berechnete Soll-Luftmasse $m_{soll}$, so dass das Steuergerät ECU die Ventileinrichtung 2 ansteuert, um die die Regeldifferenz auszugleichen. Hierdurch werden die Luftfederbälge 4a, 4b, 6a, 6b, 8a, 8b der Vorder-, Hinter- und Liftachse VA, HA und LA entsprechend belüftet und der Liftbalg 8c entlüftet und der Fahrzeugaufbau insgesamt auf das gewünschte Soll-Niveau $h_{soll}$ angehoben.

Durch eine entsprechende individuelle Ansteuerung der Luftbalgventile kann das Niveau der beiden Fahrzeugseiten auch unterschiedlich angepasst, werden, was im Falle einer exzentrischen Ladung notwendig sein kann. Ebenfalls ist ein unterschiedliches Niveau an der Vorderachse VA, an der Hinterachse HA und an der Liftachse LA durch eine entsprechende Ansteuerung der Luftbalgventile möglich. Mit dem beschriebenen Aufbau der Luftfederungseinrichtung 1 kann folglich nicht nur eine Gleichdruckregelung sondern auch eine Individualregelung realisiert werden. Der jeweilige Regelalgorithmus kann wahlweise im Steuergerät ECU programmiert sein.

Bezugszeichenliste

| | |
|---|---|
| 1 | Luftfederungseinrichtung |
| 2 | Ventileinrichtung |
| 4 a, b | Luftbälge |
| 6 a, b | Luftbälge |
| 8 a, b | Luftbälge |
| 8 c | Liftbalg |

| 10 | Versorgungsleitung |
|---|---|
| 12 | Druckluftvorrat |
| 14 | Luftleitungen |
| 16 | Entlüftung |
| 18 a, b | Drucksensoren |
| 20 a, b | Drucksensoren |
| 22 a, b, c | Drucksensoren |
| 23 | elektr. Leitungen |
| 24 a, b | Niveaugeber |
| 26 | Niveaugeber |
| 28 | elektr. Leitungen |
| 30 | Temperatursensor |

**Patentansprüche**

**1.** Verfahren zur Niveauregulierung eines Fahrzeugaufbaus mit Hilfe einer Luftfederungseinrichtung (1) durch Be- oder Entlüften von Luftbälgen (4a, 4b, 6a, 6b, 8a, 8b, 8c), **dadurch gekennzeichnet, dass** die in wenigstens einigen der Luftbälge (4a, 4b, 6a, 6b, 8a, 8b, 8c) vorhandene Ist-Luftmasse ($m_{ist}$) oder Ist-Luftmenge bestimmt und als Regelgröße in Abhängigkeit von einem vorgegebenen Soll-Niveau ($h_{soll}$) des Aufbaus auf eine Soll-Luftmasse ($m_{soll}$) oder Soll-Luftmenge eingeregelt wird.

**2.** Verfahren nach Anspruch 1, **dadurch gekennzeichnet, dass** die Ist-Luftmasse ($m_{ist}$) oder die Ist-Luftmenge in einem Luftbalg (4a, 4b, 6a, 6b, 8a, 8b, 8c) aus einer gemessenen Niveaulage ($h_{ist}$) und einem gemessenen Luftbalgdruck ($p_{ist}$) sowie der gemessenen Außenlufttemperatur ($T_{außen}$) bestimmt wird.

**3.** Verfahren nach Anspruch 1 oder 2, **dadurch gekennzeichnet, dass** die Soll-Luftmasse ($m_{soll}$) oder Soll-Luftmenge in den Luftbälgen (4a, 4b, 6a, 6b, 8a, 8b, 8c) nach folgender Vorgehensweise bestimmt wird :

a) aus den gemessenen Luftbalgdrücken ($p_{ist}$) wird die Ist-Achslast jeder Achse (VA, HA, LA) und daraus die Ist-Gesamtmasse des Fahrzeugs ermittelt,
b) aus der Ist-Gesamtmasse des Fahrzeugs wird eine Soll-Achslast je Achse (VA, HA, LA) nach einer Lastverteilungsvorgabe ermittelt,
c) aus der Soll-Achslast je Achse (VA, HA, LA) und dem vorgegebenen Soll-Niveau ($h_{soll}$) wird die Soll-Luftmasse ($m_{soll}$) oder die Soll-Luftmenge der dieser Achse (VA, HA$_1$, HA$_2$) zugeordneten Luftbälge (4a, 4b, 6a, 6b, 8a, 8b) oder des dieser Achse (VA, HA, LA) zugeordneten Luftbalgs (4a, 4b, 6a, 6b, 8a, 8b, 8c) berechnet.

**4.** Verfahren nach wenigstens einem der vorhergehenden Ansprüche, **dadurch gekennzeichnet, dass** die Berechnung der Ist-Luftmasse ($m_{ist}$) und der Soll-Luftmasse ($m_{soll}$) auf der Basis der Zustandsgleichung der Gase erfolgt :

$$p * V = m * R * T_{außen}$$

mit:

$T_{außen}$ : Außenlufttemperatur,
p : Druck in dem jeweiligen Luftbalg,
V : Volumen des jeweiligen Luftbalgs,
m : Luftmasse in dem jeweiligen Luftbalg,
R : Gaskonstante.

FIG.1

EP 1 844 961 A1

FIG.2

Europäisches
Patentamt

**EUROPÄISCHER RECHERCHENBERICHT**

Nummer der Anmeldung

EP 07 00 7153

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 101 60 972 C1 (DAIMLER CHRYSLER AG [DE]) 23. Januar 2003 (2003-01-23) | 1,2,4 | INV. B60G17/015 |
| Y | * Absätze [0042] - [0045], [0049], [0059]; Abbildung * | 3 | |
| X | WO 2005/105492 A (CONTINENTAL AG [DE]; STILLER ALEXANDER [DE]) 10. November 2005 (2005-11-10) * Seite 8, Zeile 4 - Seite 9, Zeile 5 * * Seite 10, Zeilen 10-25; Abbildungen * | 1,4 | |
| P,X | DE 10 2005 045270 A1 (CONTINENTAL AG [DE]) 29. März 2007 (2007-03-29) * Absätze [0025], [0031]; Abbildung * | 1 | |
| Y | WO 2006/005645 A (CONTINENTAL AG [DE]; ILIAS HEIKE [DE]; FOLCHERT UWE [DE]) 19. Januar 2006 (2006-01-19) * Seite 1, letzter Absatz * * Seite 4, Absatz 5 * * Seite 7, Absatz 5 - Seite 9, Absatz 2; Abbildungen * | 3 | RECHERCHIERTE SACHGEBIETE (IPC) B60G |
| A | EP 0 301 225 A (BOSCH GMBH ROBERT [DE]) 1. Februar 1989 (1989-02-01) * Spalte 3, Zeilen 31-47 * * Seite 4, Zeilen 5-15 * * Seite 6, Zeile 9 - Seite 8, Zeile 36; Abbildungen * | 3 | |
| A | EP 1 557 305 A (CROSSMOBIL GMBH [DE]) 27. Juli 2005 (2005-07-27) * Zusammenfassung * | 3 | |
| A | GB 2 373 224 A (LAND ROVER GROUP LTD LAND ROVER GROUP LTD [GB]) 18. September 2002 (2002-09-18) * Seite 2, Zeile 24 - Seite 3, Zeile 6 * | 3 | |

-/--

Der vorliegende Recherchenbericht wurde für alle Patentansprüche erstellt

| Recherchenort | Abschlußdatum der Recherche | Prüfer |
|---|---|---|
| Den Haag | 12. Juli 2007 | Schultze, Yves |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**Europäisches Patentamt**

**EUROPÄISCHER RECHERCHENBERICHT**

Nummer der Anmeldung

EP 07 00 7153

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 1 228 905 A (HINO MOTORS LTD [JP]) 7. August 2002 (2002-08-07) * Zusammenfassung; Abbildungen * ----- | 3 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 12. Juli 2007 | Schultze, Yves |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 07 00 7153

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-07-2007

| Im Recherchenbericht angeführtes Patentdokument | Datum der Veröffentlichung | Mitglied(er) der Patentfamilie | Datum der Veröffentlichung |
|---|---|---|---|
| DE 10160972 C1 | 23-01-2003 | US 2003107191 A1 | 12-06-2003 |
| WO 2005105492 A | 10-11-2005 | DE 102004021170 A1<br>EP 1744914 A1<br>KR 20070004130 A | 24-11-2005<br>24-01-2007<br>05-01-2007 |
| DE 102005045270 A1 | 29-03-2007 | KEINE | |
| WO 2006005645 A | 19-01-2006 | DE 102004033524 A1<br>EP 1768862 A1<br>KR 20070037454 A | 16-02-2006<br>04-04-2007<br>04-04-2007 |
| EP 0301225 A | 01-02-1989 | DE 3724696 A1 | 02-02-1989 |
| EP 1557305 A | 27-07-2005 | DE 102004003023 A1 | 11-08-2005 |
| GB 2373224 A | 18-09-2002 | GB 2373223 A | 18-09-2002 |
| EP 1228905 A | 07-08-2002 | JP 3793418 B2<br>JP 2002225530 A | 05-07-2006<br>14-08-2002 |

EPO FORM P0461

Für nähere Einzelheiten zu diesem Anhang : siehe Amtsblatt des Europäischen Patentamts, Nr.12/82